# EUROPEAN PATENT APPLICATION

(11) **EP 4 729 924 A1**
(43) Date of publication of application: **22.04.2026**
(21) Application number: 24207655.2
(22) Date of filing: 18.10.2024
(51) Int. Cl.: G01N 21/27, G01N 21/31, G01N 21/47, G01N 21/51, G01N 21/64

(54) **ANALYTICAL DEVICE AND ANALYTICAL PROZESS**

(71) Applicant: Prosperodes GmbH, 38124 Braunschweig (DE)
(72) Inventor: LÜHRS, Thorsten, 38124 Braunschweig (DE)
(74) Representative: Taruttis, Stefan Georg

(57) **Abstract**

An analytical device and an analytical process, set up for internal referencing which is independent from the kind of optical response of a sample, are disclosed. The device comprises a light source 8 directed to a sample location 3, a photon counting detector 9 set up to receive light emanating from the sample location and to generate photon counts 10, an integrator 11 coupled to the detector and set up to receive photon counts from the detector and to integrate the photon counts over an integration time to generate integrated measurement signals 12, and coupled to the integrator an analogue-to-digital converter 13 set up to receive the integrated measurement signals and to generate digital measurement signals 14 for each of the integrated measurement signals and to deliver the digital measurement signals to a control unit 15, which is set up for deconvolution of the digital measurement signals in order to determine correction functions, wherein the control unit is set up to convert separately determined digital measurement signals which are determined for samples in dependence on the correction functions.

## Description

The present invention relates to an analytical device and to an analytical process for optical measurements, especially for irradiating a sample and measuring light emanating from the sample and determining light emanating from a sample relative to light measured for a reference, wherein the reference has pre-determined optical characteristics and may be a component of the device, also referred to as relative measurement, and/or preferably for determining absolute light emanating from a sample, which light is put into relation to a calibration standard, which can be a validated external calibration standard, referred to as absolute measurement. Therein, the light measured generally is light emanating from a sample in response to irradiation directed onto the sample, e.g. light scatter, fluorescence, turbidity, or absorption. The sample may be liquid or solid. The device is adapted to perform the analytical process, and accordingly, the features of the process as described correspond to the set-up of the device for the process features.

The device is set up for internal referencing such that its specific optical elements, e.g. at least one light source set up to irradiate a sample location, a detector set up to receive light emanating from the sample location, and an integrator set up to integrate measurement signals over an integration time, an irradiating light path set up to guide light from the light source to a sample location and a detecting light path set up to guide only light emanating from the sample location to the detector, are defined such that their characteristic can be considered in determining or interpreting measurement signals. The device therefore has the advantage of allowing comparison and interpretation of measurement signals obtained for different samples obtained by one device at different times, and of measurement signals obtained by different devices of the same embodiment with high accuracy. Moreover, the device allows the correlation of different types of measurements, e.g. be light scatter, fluorescence, turbidity, e.g. absorption, with high accuracy, using one optical reference element. Optionally, the analytical device and the analytical process can be set up to measure at least two optical properties selected from light scatter, fluorescence, turbidity, and absorption for one sample, with one and the same reference being used for calibration of the optical properties, e.g. the device and the process are set up for calibration of at least two properties with the same reference, e.g. an optical reference element which preferably is arranged within the device. Further, the device and process have the advantage of allowing the comparison of measurements obtained at different set-ups of devices, as the device and process generate measurements which can be converted to measurement data obtainable by a standard set-up. To this end, the device and the process are set up to generate correction functions specific for one device. In a preferred embodiment, the device and the process are set up for absolute referencing, using a validated optical element as an external reference, e.g. as a calibration standard, such that measurement signals obtained for different samples obtained by different individual devices of the same type allow their absolute comparison and interpretation.

### State of the art

WO 2016/001334 A1 describes an array of cylindrical rotors driven in cylindrical wells which schematically have a 90° cone-shaped bottom for irradiating from one side and receiving detection light at the opposite side.

Yokoyama et al., SNIC Symposium, 0126, California 3-6 April 2006, describe a multi-pixel photon counter (MMPC) developed by Hamamatsu Photonics of Japan.

### Object of the invention

It is an object of the invention to provide an analytical process and a device set up to perform an analytical process which allows for precise optical measurement with high sensitivity, preferably allowing the conversion of measurement results to one calibration standard, especially for measurement of light scatter and/or fluorescence.

### Description of the invention

The invention achieves the object by the features of the claims and especially provides an analytical device and an analytical process, wherein the device is set up for the process. The device is set up for internal referencing, in a preferred embodiment for absolute referencing of measurement signals by use of a reference, which is e.g. an optical reference element contained in the device and movable into a sample location, and/or a reference sample, herein also termed calibration standard, e.g. a validated external calibration standard. The device and the process have the advantage that referencing is independent from the kind of optical response of a sample, e.g. referencing is based on internal features of the device and process, such that the optical response of a sample to be measured can independently be fluorescence, absorption, turbidity or light scatter, or at least two of these, e.g. when the sample is irradiated by the light source emitting one wavelength only, by a light source emitting, concurrently or alternatingly, two wavelengths or when the sample is irradiated by irradiation emitted by two light sources emitting different wavelengths, concurrently or alternatingly. The set-up of the device for internal referencing has the advantage of allowing for comparison of measurement signals determined subsequent or in parallel to one another by the same device with high accuracy. The set-up of the device for absolute referencing has the advantage of allowing for comparison of measurement signals determined subsequent to one another and/or determined by different devices with high accuracy, optionally for one or more of measurement of fluorescence, of absorption, of turbidity, and of light scatter.

The analytical device, in order to be set up for internal referencing, preferably for internal linear referencing, comprises a light source directed to a sample location, e.g. by an irradiating light path, which preferably is fixed, a photon counting detector set up to receive light emanating from the sample location and to generate photon counts, e.g. by the detector being coupled to a detecting light path directed towards the sample location, an integrator coupled to the detector and set up to receive photon counts from the detector and to integrate the photon counts over an integration time to generate integrated measurement signals, and coupled to the integrator an analogue-to-digital converter (ADC) set up to receive the integrated measurement signals and to generate digital measurement signals for each of the integrated measurement signals and to deliver the digital measurement signals to a control unit, which is set up for deconvolution of the digital measurement signals in order to determine correction functions, wherein the control unit is set up to convert separately determined digital measurement signals which are determined for samples in dependence on the correction functions. Generally, it is preferred that the control unit is set up for deconvolution of at least two measurement signals, e.g. selected from measurement for different reference elements, e.g. optical reference elements or reference samples, present in the sample location. Preferably, the digital measurement signals from which correction functions are determined have been determined for an optical reference element, for a standard sample or reference sample, also referred to as a calibration sample, and/or have been determined in the absence of a sample in the sample location, i.e. for an empty sample location, as it has been found that light source irradiation reflected to or otherwise indirectly reaching the detector is sufficient for signal generation suitable for determining the correction function. Preferably, especially for absolute referencing, a solid optical reference element, e.g. an optical filter, a reflector, an optical grid and/or an optical diffusing plate serving as an optical reference element which is a calibration standard, is arranged in the sample location for generating measurement signals for determining correction functions. Optionally, the digital measurement signals from which a correction function is determined are for both an optical reference element and/or for a reference sample under irradiation light of the same wavelength, but at a different intensity, or under irradiation at at least two different wavelengths. Generally, a reference sample has a pre-determined concentration of an analyte and/or of a dye specific for the analyte. Generally, the correction function can be stored in or accessed by the control unit in the form of a table containing correction factors that represent the correction function values for tabulated settings of the device.

In order to be suitable for precise measurement of optical properties of a sample, especially fluorescence, turbidity, absorption of light and/or light scatter, the device shall have a very sensitive optical detector. As a side-effect of the optical detector being very sensitive, variations of elements of one device and variations of elements contained in different devices of the same built, e.g. variations between elements such as light sources, optical paths from the light source to a sample location, referred to as irradiating light paths, optical paths from the sample location to the detector, referred to as detecting light paths, variations between optical detectors or of detector sections, variations between integrators and variations between ADCs have the potential to influence the measurement result. In the device and process, such variations of elements are eliminated from measurement results by determining correction functions which are determined for a reference, e.g. a validated solid optical reference element which preferably is contained in the device.

Generally, the device preferably has at least two sample locations, more preferably at least four, at least six or at least eight sample locations, e.g. up to 96, up to 48, up to 24 or up to 16 or up to 12 sample locations, which sample locations may be arranged in one row or in at least two rows, preferably parallel rows.

Generally, the device for each sample location has at least one light source coupled to a fixed irradiating light path, at least one fixed detecting light path, a detector fixedly arranged to receive light from the at least one detecting light path, an integrator set up to integrate the photon counts transmitted by the detector, preferably the integrator being set up to separately integrate the photon counts of each detecting light path, and a separate ADC coupled to each integrator. The device preferably contains a solid optical reference element movable into each of the sample locations, e.g. one separate optical reference element for each sample location, in order to determine a correction function with reference to the optical reference element, e.g. for internal calibration. The solid optical reference element preferably is a standardized element having pre-determined and reproducible optical properties, e.g. an inert resin or a mineral compound, e.g. a glass, e.g. an optical filter, or a coating.

Preferably, the optical reference element has a linear response characteristic for different intensities and/or for different wavelengths of incident light. For example, the optical reference element preferably emanates the same proportion of incident light when irradiated by the light source. E.g. the reference element may be a lambertian reflector that reflects 99%, 50%, 25%, 10%, 2.5% or 1% of the incident light across a broad range of wavelengths.

Optionally, the device is set up for determination of a correction function prior to arranging and analysing samples in the sample location, and for determination of a correction function subsequent to arranging and analysing samples in the sample location, e.g. in order to determine and correct for a deviation, or drift, of measurement signals.

As the digital measurement signals, which are delivered to the control unit, are influenced by the characteristic of the light source, by the characteristic of the detector, by the characteristic of the integrator, and by the characteristic of the ADC, their deconvolution by the control unit generates a correction function, which can also be termed a combined correction function, which encompasses the correction functions for the characteristics of each of these individual elements. The device is set up for generating correction functions, because the detector is intrinsically linear over a wide range, and preferably further because the reference yields a linear response with the incident light. Therefore, the correction functions for the characteristics of each of the individual elements of the device provides a means to linearize their behaviour, and hence to interconvert measurement results between different combinations of settings of the device, e.g. settings for light source, for the detector, for the integrator, and for the ADC.

It was found that correction functions for different incident wavelengths or correction functions for each of absorption, turbidity, fluorescence and light scatter, can be determined by positioning one optical reference element in the sample location, i.e. using one and the same optical reference element for determination of correction functions and internal calibration for different wavelengths and for each of absorption, turbidity, fluorescence and/or light scatter.

Preferably, the detector is applied with a bias voltage, preferably the detector is subsequently applied with at least one different bias voltage, each of which voltages is within the linear response range of the detector, resulting in the specific advantage of the digital measurement signals being linear, and hence resulting in the specific advantage of the correction function generated by deconvolution of the digital measurement signals being linear. Therein, the device and the process of the invention make use of the detector response being known to be linear, e.g. over a wide range of light intensities received by the detector. Suitable bias voltages for the linear response range can be determined according to standard practice, e.g. as described by Yokoyama et al., loc. cit. Herein generally, the characteristic of an element is the response function which governs the output generated from an input, e.g. the characteristic of the light source is its radiation power in response to the drive power applied, the characteristic of the detector is the number of photon counts for a bias voltage for a certain incident light intensity, the characteristic of the integrator is the output for an integration time, and the characteristic of the ADC is its specific response output of a digital measurement signal for in input integrated measurement signal. Typically, the direct outputs of the light source, of the integrator, and of the ADC are not linear with their inputs, especially when they are a part e.g. of electronic circuits. Generally preferred, the device, e.g. its control unit, is set up to subtract a measurement signal obtained without any drive power applied to the light source which is a dark signal, from measurement signals which are obtained for drive power applied to the light source, i.e. for the light source irradiating a sample location. A measurement signal obtained when the light source is not powered, i.e. a dark signal, for a measurement signal represents its background proportion caused by the detector, the integrator, the ADC, and the control unit. Generally preferred, the correction function is applied individually to the measured dark signal, and to the measured light signal, before the corrected dark signal is subtracted from the light signal corrected by the correction function to obtain the corrected light signal.

In an embodiment, the device is set up to control at least one of the drive power applied to the light source, of the bias voltage applied to the detector, of the integration time applied by the integrator, and of the characteristic of the ADC, in order to generate a measurement signal which is in a pre-determined range of values, which can be a dynamic measurement range. This pre-determined range of values of measurement signals can be a range pre-determined as the linear response range of the device. In this embodiment, the correction functions are applied to convert the measurement results to measurement results applicable for a pre-determined, or standard, setting of the device, i.e. of at least one of the drive powers applied to the light source, of the bias voltage applied to the detector, of the integration time applied by the integrator, and of the characteristic of the ADC. Also in this embodiment, the correction functions are determined for an optical reference element in the sample location, preferably in addition for at least one calibration standard.

Preferably, the control unit is set up, e.g. subsequent to an initializing procedure, to control at least one of, preferably each of the drive power applied to the light source, the bias voltage applied to the detector, and the integration time applied by the integrator, optionally a setting of the ADC, each in dependence on the correction function. The device can be set up for an initializing procedure which comprises or consists of providing a first bias voltage to the detector for its linear response range, applying a first drive power to the light source, setting a first integration time of the integrator, and for this setting determining a first correction function, thereafter applying a second drive power to the light source and/or setting a second integration time of the integrator and for each setting determining a correction function by deconvolution of the digital measurement signal. Therein, as the correction function is preferably based on a linear response characteristic of the detector at one detector setting of a bias voltage, the detector preferably being a photon counter, and more preferentially being a multi-pixel photon counter, the detector forms an internal referencing function which intrinsically is linear, resulting in the correction function when controlling the drive power applied to the light source linearizing the light power irradiated onto the sample location, a correction function for linearizing the integrator output and a correction function for linearizing the ADC output. These correction functions, one for each of the light source, the integrator, and the ADC allow a subsequent conversion of measurement results to different settings of the light source, of the detector bias voltage, of the integrator and of the ADC, preferably individually for each sample location. It is an advantage of the device and process of the invention that these correction functions allow for an accessible dynamic measurement range of approx. 10⁸ as calculated from measurements with an exemplary set-up of the device. The control unit preferably is set up to transmit digital control signals for the drive power applied to the light source, for the bias voltage applied to the detector, and for the integration time applied by the integrator, optionally for a setting of the ADC, to a separate digital-to-analog converter each, connected to the light source, respectively to the detector, and optionally to the ADC. The control unit may be set up and connected to the integrator for transmitting digital control signals to the integrator, or may be connected to the integrator via an intermediate digital-to-analog, depending on the integrator. The integrator may e.g. be an electric pulse counter or a capacitor.

Preferably, in the initializing procedure an optical reference element, and/or a reference standard, e.g. a reference sample, and/or optionally additionally a validated optical reference element and/or a validated reference sample is arranged in the sample location and measured, and on the basis of these measurements, the absolute correction function is determined, wherein this correction function preferably is a simple multiplication factor only. Therein, a validated optical reference element and a validated reference sample can be validated to have pre-determined and absolutely reproducible optical properties, suitable for calibrating different devices and/or for calibrating the same device at different points in time to a validated, external calibration standard, which preferably is a sample, e.g. a biological sample, of known origin and known composition and validated to have reproducible and known characteristics in respect of composition, contents and/or optical properties. In an embodiment, the validated optical reference element may be only one individual optical reference element, which for standardization is used in different devices and at different points in time. The optical reference element and the validated optical reference element preferably are chemically stable, e.g. consist of inert compounds, e.g. mineral compounds only or polyfluorinated polycarbons, e.g. PVDF or PTFE, such that their optical properties are invariable over time. The reference sample as well as a validated reference sample preferably is contained within a sample vessel having the same constitution as sample vessels containing samples during measurement. A reference sample may e.g. comprise or consist of a suspension of nanoparticles, e.g. of glass, resin, organic polymer, of metal or metal oxide, in each case preferably of a pre-determined and reproducible size distribution. The suspension may be in aqueous or organic medium.

Optionally, the device is set up to measure light emanating from a sample during agitation of the sample, e.g. during rotation of a rotor contained in a sample vessel. Alternatively, the device can be set up to measure light emanating from a sample while the sample is left without agitation, e.g. while all elements of a sample vessel are unmoved, respectively static, or the device can be set up to measure light emanating from a sample both during agitation of the sample and while the sample is left without agitation.

The light source may be an LED or a laser, or a flash lamp, e.g. a Xenon-flash lamp, e.g. an LED capable of emitting at two different wavelengths. Preferentially, the light source draws only small currents that do not vary strongly over time, e.g. Xenon-flash lamps would be less preferred light sources. The detector preferably is a photon counter, e.g. an avalanche photo diode, or a photomultiplier tube, more preferentially a multi-pixel photon counter, e.g. as described in Yokoyama et al., loc. cit., also referred to as a photon-counting matrix detector. Generally, a detector may be a section of a multi-pixel photon counter. Generally preferred, the measurement process, and sensitivity, is in the linear response range of the detector, e.g. by means of setting the bias voltage applied to the detector to its linear response range. The integrator may be a capacitor of a pulse counter. The deconvolution may e.g. be a Fourier transform, a singular value decomposition, and/or a numerical optimization procedure.

The sample location can be spaced from the end face of the irradiating light path to the opposite end of which the light source is coupled, and spaced from the end face of the detecting light path the opposite end of which is coupled to the detector. Preferably, the end face of the fixed irradiating light path, which end face is directed to the sample location, is formed by the terminal cross-section of an optical fibre, i.e. without an optical element between this end face and the sample location. Optionally, the fixed irradiating light path consists of one or more optical fibres, optionally having an optical filter between the light source and the optical fibre. Preferably, the end face of the fixed detecting light path, which end face is directed to the sample location, is formed by the terminal cross-section of an optical fibre, i.e. without an optical element between this end face and the sample location. Optionally, the fixed detecting light path consists of one or more optical fibres, optionally having an optical filter between the optical fibre and the detector. A sample location is located in the irradiating light path and in the detecting light path, e.g. with a spacing from the end faces of optical fibres forming these light paths.

For referencing of measurement signals, especially of measurement signals obtained for samples, the device as a reference preferably comprise an optical reference element, which can be positioned in the sample location, e.g. by the optical reference element being arranged on a sample holder that can be moved to position the optical reference element in the sample location. A sample holder can e.g. be a linearly slidable holder having recesses for receiving sample vessels and, e.g. with a spacing from the recesses, having an optical reference element. Preferably, the sample holder comprises recesses, preferably through-holes, for receiving sample vessels, which recesses are arranged in an arrangement such that each recess can be moved into a sample location, and in addition, the sample holder contains at least one optical reference element which can be moved into each sample location, preferably at least one optical reference element for each sample location. Multiple reference elements may be contained in the sample holder, each chosen to be suitable, e.g. for measurement of fluorescence, scattered light, absorbance, under incident light.

Further, it was found that the device is suitable for determining low intensities of light hitting the detector. In a preferred embodiment, the irradiating light path which is directed towards the sample location and the detecting light path which is directed towards the sample location for receiving light from the sample location are arranged at a small angle between them or are arranged in parallel. This arrangement of the irradiating light path and of the detecting light path at a small angle between them or in parallel minimizes the direct impact of light emitted from the light source onto the detector. Further, this arrangement of the irradiating light path and of the detecting light path allows for a preferred embodiment, in which both the irradiating light path and the detecting light path are directed to a lower end of a sample location which is arranged for receiving a sample vessel above these light paths, resulting in both the light paths being directed towards the bottom of a sample vessel arranged within the sample location. The irradiating light path and the detecting light path may both comprise end sections formed by optical fibres which terminate in end faces that are arranged in one common plane, preferably at a distance from and below the sample location. This embodiment is suitable for use of the device and process for analysing a sample contained in a sample vessel having an optically transparent bottom wall which preferably is plane at least in the section towards which the irradiating light path and the detecting light path are directed. Therein, the sample vessel preferably has a curved, e.g. round circumferential outer wall, which may be cylindrical or tapering.

The analytical process preferably comprises an internal referencing by determining correction functions for a solid optical reference element arranged a sample location, preferably determining a correction function for a solid optical reference element for each sample location. As this correction function is determined in relation to the internally arranged solid optical reference element, this correction function is also referred to as internal correction function or internal calibration function. In addition, the analytical process may comprise determining an external correction function, i.e. external referencing to a validated external solid optical standard and/or to a validated external liquid sample reference contained in a sample vessel.

Generally preferred, e.g. by external referencing, an absolute correction function is determined for a validated solid optical reference and/or for a validated liquid sample reference contained in a sample vessel, and a conversion function is determined from the internal correction function and the absolute correction function, which conversion function is usable to convert measurement signals corrected by the internal correction function to measurement signals corrected by the absolute correction function.

The invention is further described with reference to the figures, which show in
- Fig. 1 a schematic of an embodiment of the device,
- Fig. 2A an exemplary analogue measurement signal,
- Fig. 2B exemplary signals of an ADC in dependence on integration times for different light intensities generated by a light source,
- Fig. 2C an exemplary integrated measurement signal in dependence on the integration time,
- Fig. 3A an exemplary characteristic of a light source,
- Fig. 3B a standard deviation of the light intensities of an exemplary light source,
- Fig. 3C Residuals deviation from linearity determined for the digital measurement signal of an exemplary ADC after application of the ADC correction,
- Fig. 4A corrected ADC-Signals as functions of the applied detector bias-voltage for different light intensities of an exemplary light source,
- Fig. 4B averaged normalized gain values for an exemplary detector obtained by appropriate linear scaling of the individual data series shown in 4A, and
- Fig. 4C a standard deviation of normalized gain values at different bias voltages for an exemplary detector obtained after appropriate linear scaling of the individual data series shown in 4A

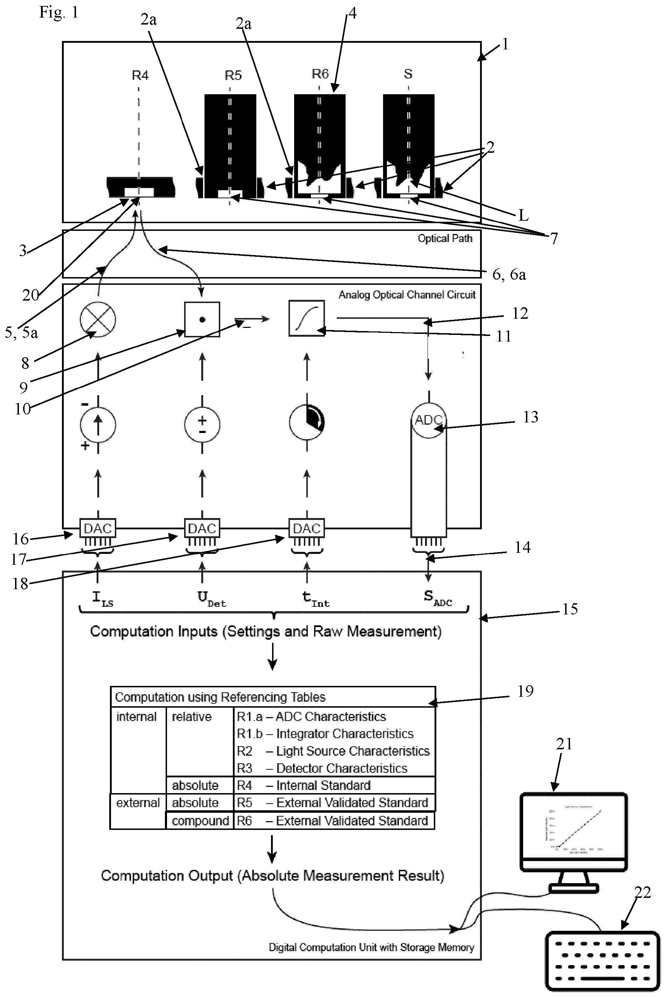

Fig. 1 in a light-proof housing 1 of a device shows a movable sample holder 2 containing an optical reference element 20, and recesses 2a, in which sample vessels 4 containing a liquid sample L are arranged, in a position of the sample holder 2 in which the optical reference element 20 is arranged in the sample location 3. The sample holder 2 can be moved to arrange one of the recesses 2a in the sample location 3. As preferred, the sample holder 2 contains an optical reference element 20 and an arrangement of recesses 2a which in the analytical process may contain sample vessels 4, e.g. each containing a liquid sample L. The sample location 3 is arranged in the irradiating light path 5 and in the detecting light path 6, each formed by an optical fibre 5a, 6a which terminates with a spacing from the sample location 3. As preferred, the irradiating light path 5 and the detecting light path 6 are formed by separate optical fibres 5a, 6a which terminate in end faces which are directed towards an optically transparent bottom section 7 of the sample vessel 4. Opposite its end directed towards the sample location 3, the irradiating light path 5, respectively the optical fibre 5a, is coupled to a light source 8. Opposite its end directed towards the sample location 3, the detecting light path 6, respectively the optical fibre 6a, is coupled to a detector 9, which is a photon counting detector set up to generate photon counts 10, e.g. represented by a current. The detector 9 is coupled to an integrator 11, which is set up to receive and to integrate the photon counts 10 over an integration time t_{Int} to generate an integrated measurement signal 12, which is received by an analogue-to-digital converter (ADC) 13 coupled to the integrator 11. The ADC 13 is set up to generate a digital measurement signal 14 (S_{ADC}) from the integrated measurement signal 12. The ADC 13 is coupled to a control unit 15 which receives the digital measurement signal 14 and by deconvolution of the digital measurement signal 14 generates a correction function. As the digital measurement signal 14 intrinsically contains the characteristic of the elements that affect its generation, including the characteristic of the detector 9, the correction function is suitable for referencing, and for correcting measurement signals generated from photon counts 10 determined for optical reference elements 20 (R4, R5, R6), and for samples (S) arranged in the sample location 3.

As preferred, the control unit 15 is set up to control the light source 8 by setting its drive power I_{LS}, e.g. by a digital-to-analogue converter (DAC) 16 arranged between the control unit 15 and the light source 8, to control the detector 9 by setting its bias voltage U_{Det}, e.g. by a DAC 17 arranged between the control unit 15 and the detector 9, and to control the integrator 11 by setting its integration time t_{Int}, e.g. by a DAC 18 arranged between the control unit 15 and the integrator 11.

Preferably, the control unit 15 is set up to determine correction functions, which may be represented by correction factors, e.g. stored in a correction factor table 19, and for converting digital measurement signals obtained for a sample on the basis of the correction factor table 19. The correction functions, resp. correction factors, may be used for determining digital measurement signals from the measurement signals obtained for samples (Computation using Referencing Tables). When using correction functions determined by use of absolute standards, e.g. an optical reference element 20, preferably an external validated standard R5, R6, the device outputs absolute measurement results.

As indicated schematically by the correction factor table 19 the device and process are set up for internal relative referencing for determining correction functions for the ADC characteristics, for the integrator characteristics, for the light source characteristics, and for the detector characteristics, and the device is set up for internal absolute referencing by determining correction functions for the optical reference element R4 being arranged in the sample location. For referencing to an external standard, the device and process is set up for referencing to a solid external validated standard (absolute) R5, i.e. a solid calibration standard, and preferably in addition is set up for referencing to a liquid external validated standard (compound), i.e. a liquid calibration standard, contained in a sample vessel R6, in each case determining correction functions on the basis of each of these references. When applying correction functions determined for a solid and/or liquid calibration standard to measurement results obtained for a sample (L, S)

The device preferably comprises a visual output device 21, e.g. a computer-controlled display, and a data input device 22 for external control.

As preferred, the device contains an optical reference element 20 which can be arranged in the sample location 3 by moving the sample holder 2. The optical reference element 20 serves as a reference, as the correction function derived from digital measuring signals determined for the optical reference element 20 allows for the correction of digital measurement signals obtained for a sample contained in a sample vessel 4 in relation to the optical reference element 20. In this embodiment the device and the process of the invention have the advantage of allowing the comparison of digital measurement signals 14 obtained for samples in sample vessels 4, which digital measurement signals 14 have been determined with correction functions determined for the optical reference element 20, preferably using in the correction functions the same drive power (I_{LS}) applied to the light source 8 and the same bias voltage U_{Det} applied to the detector, or with correction factors derived from these correction functions.

In the analytical process, measuring the optical reference element 20 (R4) is used for determining a correction function, at least at one set of settings, preferably at two or more settings of at least one of the bias voltage U_{Det} to the detector 9 for its linear response range, the drive power I_{LS} to the light source (8), and the integration time t_{Int} of the integrator (11), e.g. for an initializing procedure. These measurements generate absolute correction functions having reference to the optical reference element 20 (R4), e.g. as an internal standard, which correction functions can be represented as a correction factor table 19, referred to as Referencing Tables in Fig. 1. Correction functions determined from measurement signals obtained without any optical reference element 20, R4, R5, R6, nor sample vessel 4 containing a liquid calibration standard (R6), preferably with an optical reference element or a reference sample arranged in the sample location 3, are relative internal, e.g. because the reference element 20 (R4) is not validated as an absolute external reference. Relative internal referencing generally determines the relative behavior of one specific set of light source, detector, integrator and ADC, in relation to a reference, preferably an optical reference element 20 contained within the device. For the cross referencing of different devices and/or referencing with external standards, determination of correction functions for at least one external standard R5, R6 is preferred, allowing for absolute referencing. Relative internal referencing is used for the internal linearization of the device. External referencing is used for appropriate absolute scaling of one ore more devices, or for appropriate absolute scaling of one ore more light sources or light paths on one detector or more detectors.

As preferred for comparability of measurement results obtained for different built of the device or obtained using one device but at different times and possibly with different settings, an externally validated calibration element R5 can be used for determining absolute correction functions, which can be a multiplication factor only, e.g. in an initializing procedure. For example, a validated standard reference element R5 (preferably a solid calibration element) can be an optical element that is resistant to aging, e.g. a mineral compound or an inert resin like PVDF or PTFE, each of defined shape. Optionally, a validated standard reference element R5 may be one individual specimen that is used in an initializing procedure in several specimens of the device. Similarly, as a calibration standard, a validated standard compound R6 may be used for determining the correction functions, e.g. in an initializing procedure, preferably in an initializing procedure using an validated external calibration standard, providing an external calibration procedure. With reference to a validated standard reference element R5 and/or to a validated standard compound R6 the correction functions have reference to these external calibration standards (external absolute, resp. external compound) can be determined and stored as a correction factor table 19.

For the following measurements, a device as shown in Fig. 1 was used. The light source 8 was an LED emanating at 450 nm coupled to an optical fibre 5a forming the irradiating light path 5, the opposite end of which was directed towards the sample location, the detector 9 was a multi-pixel photon counter (Hamamatsu) coupled to an optical fibre 6a forming the detecting light path 6, the opposite end of which was directed to the sample location 3, wherein the ends of the optical fibres were formed by the cross-section of each fibre, and the integrator 11 was a capacitor. The ends of the optical fibres 5a, 6a that were directed to the sample location 3 were arranged at a distance such that preferably only little to no light irradiating from the optical fibre 5a coupled to the light source 8 could be received directly by the optical fibre 6a coupled to the detector 9. Generally, the irradiating light path 5 and the detecting light path 6 are arranged such that irradiation from the optical fibre 5a cannot directly irradiate towards the optical fibre 6a coupled to the detector 9, when the cone of irradiation emanating from the optical fibre 5a coupled to the light source 8 partially overlaps with the cone of detection of the optical fibre 6a coupled to the detector 9, wherein both the optical fibres 5a, 6a are directed to optical reference element 20 arranged in the sample location. A white diffusing glass plate was used as the optical reference element 20 (R4). From these measurements using the optical reference element 20 (R4), correction functions for internal referencing were derived. In addition, an external solid optical reference element R5 was arranged in the sample location for measurements in order to determine correction functions for external absolute referencing, i.e. referring to this solid reference element R5, which was externally validated and reproducible, the correction functions allowing to convert measurement signals to measurement results in relation to this reference element. As the solid external reference element R5 can be used in each sample location of one device and in sample locations of other devices of the same built, the correction function allows a direct comparison of measurement results after correction by this correction function, also for measurements obtained by different devices of the same built.

In addition, a correction function was determined for a validated, i.e. reproducible reference standard of known analyte and concentration, e.g. containing a fluorescent compound and/or suspended particles as analyte, as a liquid reference sample contained in a sample vessel R6. The correction function determined for a liquid reference sample R6 allows to derive correction functions suitable for determining the concentration of the same analyte in a sample of unknown concentration contained in a sample vessel S.

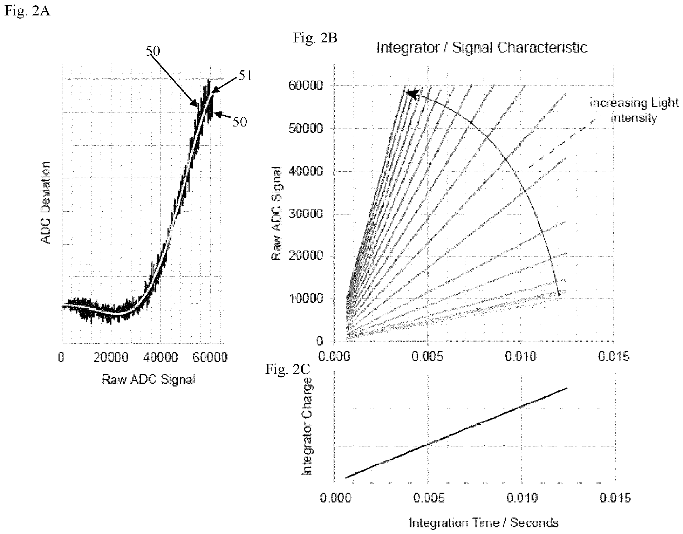

The data shown in Figures 2 to 4 are real measurement results and values derived from these. These data show that the device is set-up to generate correction functions, preferably using measurements obtained for an optical reference element and/or a reference sample arranged in the sample location, wherein the correction functions essentially allow to linearize signals generated by the light-source, the integrator and the ADC, with low standard deviations. As the correction functions are essentially linear as shown by the dependency of the digital measurement signals from the characteristics of the light source 8, of the detector 9, of the integrator 11, and of the ADC 13, these data show that the device and the process are set-up for converting measurement signals obtained with a specific setting of the device to a setting of the device that is determined as a standard setting, using the correction functions for converting measurement signals.

The standard setting can be determined arbitrarily, preferably for a setting generating light of an intensity incident onto the detector which is far below the saturation intensity of the detector. Therein, the setting of the device comprises the drive power applied to the light source, the bias voltage applied to the detector, the integration time applied by the integrator, which settings are preferably controlled by the control unit, and preferably the setting also comprises at least one or all of the characteristics of the detector 9, the characteristics of the optical fibres 5a, 6a, the characteristics of the integrator 11, and the characteristics of the ADC 13. The linearization of one device by means of the correction functions allows the conversion of any one measurement signal obtained for specific device settings into one standard measurement signal that would have been obtained at standard reference device settings, and thus allows for comparison of measurement results determined on different specimen of the device and for comparison of measurement results determined on different days and/or by different operating personnel, and/or different specimens of devices according to the invention.

The measurements as depicted below show that the correction functions, especially when determined for an optical reference element, due to their linearity allow for converting measurement results to a standard setting of the device by simple multiplication or by use of tabular factors representing the relation between different settings of the device.

Fig. 2A depicts an exemplary plot of the deviation as measured for an exemplary ADC as a function of the raw ADC signal. The raw values of the deviation (black lines) 50 gave rise to the polynomial approximation (white line) 51, which allows to generate correction factors that can be stored as a correction factor table 19. The raw values 50 can be understood as noise of the ADC, showing that above a raw ADC signal value of approx. 32000 the deviation drastically increases beyond the standard deviation of the measurement. This non-linear characteristics of the ADC is compensated for by the correction function.

Fig. 2B depicts measurement data from determining the raw ADC output, i.e. the digital measurement signals, as a function of the integration time used by the integrator for increasing light intensities (curved arrow). Therein, the lowest light intensity (start of curved arrow) essentially corresponds to the dark signal. From the raw data, the characteristic of the ADC (Fig. 2A) and of the integrator (Fig. 2C ) were determined by deconvolution .

Fig. 2C depicts a plot of an integrator being charged with photon counts (represented as integrator charge) as a function of the integration time. This deconvolution shows that the relationship is essentially linear, with a very slight sigmoidal curvature.

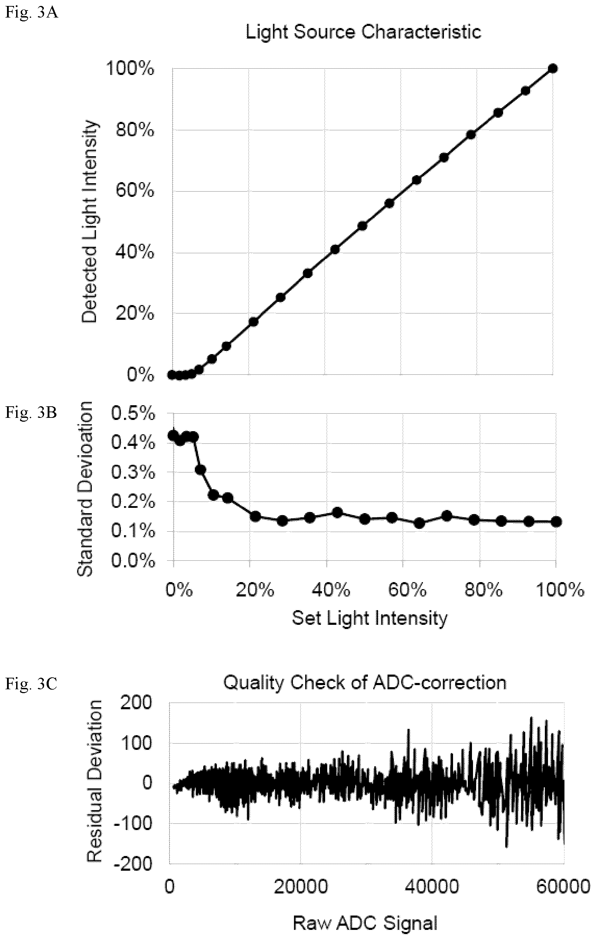

Fig. 3A shows a plot of the measured light source characteristic (dots) as a function of light source intensities as represented by the drive power applied. For this exemplary LED light source, a nearly linear characteristic over a wide range was found by approximation (solid line) for very low drive power settings, e.g. from 2 or 3 % power, up to 100% power applied.

Fig. 3B shows a plot of the standard deviation of the measured light intensities as a function of light source intensities. The deviation (solid dots) was determined for the measured values from the approximated function (solid line of Fig. 3A) of the light source characteristic. These data show that the standard deviation (SD) of the light intensity over a wide range of drive power is very low, e.g. at 20% to 100% drive power the SD is below 0.2%, and even at low drive power below 20% the SD is below 0.45%.

Fig. 3C shows a plot of the residual deviation of the values generated by the ADC as a function of the measured raw ADC output signal. This result shows that no systematic deviation is observed, and that the spread after processing the real measurement signals by the device and according to the analytical process is low, e.g. in a value range essentially between +100 and -100 for raw ADC signal values up to 50000, corresponding to a standard deviation of approx. 0.2%.

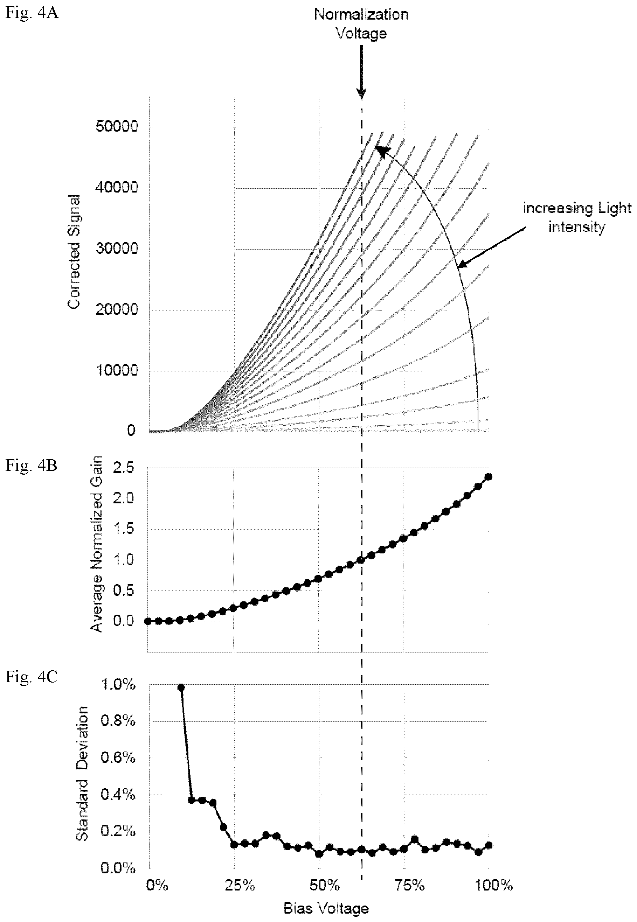

Fig. 4A shows a plot of the digital measurement signals generated by the ADC for different bias voltages applied to the photon counting detector and at different light intensities, each digital measurement signal after subtraction of the digital measurement signal obtained in darkness (dark signal), which is the digital measurement signal obtained without drive power applied to the light source, each digital measurement signal after application of the correction function. The curved arrow indicates increasing light intensities of the curve field of raw data.

The normalization voltage as indicated by the vertical line in Figs. 4A, 4B and 4C could be determined arbitrarily and was chosen for a value that was applicable to all light intensities, i.e. up to 100% light intensity. This normalization voltage was also suitable for the detector characteristic shown in Fig. 4B and for a very low SD of digital measurement values.

Fig. 4B shows a plot of the detector characteristic as a function of the bias voltage applied.

The averaged normalized gain measurement values (solid dots) were obtained by averaging measurements for all light intensity values shown in Fig. 4A after normalizing these values to their signal value at one normalization voltage, which was selected arbitrarily. The approximation (solid line) allows to generate and store correction values in parametrized form, e.g. in a correction factor table.

Fig. 4C shows a plot (solid dots are individual SD values) of the standard deviation (SD) of the average normalized gain as a function of bias voltages.

**Reference signs:**

| | | | |
|---|---|---|---|
| 1 | housing | 13 | ADC (analog to digital converter) |
| 2 | sample holder | 14 | digital measurement signal |
| 2a | recess | 15 | control unit |
| 3 | sample location | 16, 17, 18 | DAC |
| 4 | sample vessel | 19 | correction factor table |
| 5 | irradiating light path | 20 | optical reference element |
| 5a | optical fibre forming the irradiating light path | 21 | visual output device |
| | | 22 | data input device |
| 6 | detecting light path | L, S | sample, e.g. liquid |
| 6a | optical fibre forming the detecting light path | U_{Det} | bias voltage for detector |
| | | I_{LS} | power applied to light source |
| 7 | optically transparent bottom section | t_{Int} | integration time |
| 8 | light source | S_{ADC} | digital measurement signal 14 |
| 9 | detector | 50 | raw values of ADC deviation |
| 10 | photon pulses (counts) | 51 | polynomial approximation of ADC deviation |
| 11 | integrator | | |
| 12 | integrated measurement signal | | |

## Claims

1. Analytical device, especially for use in determination of light emanating from a sample, the device comprising a light source (8) directed to a sample location (3), a detector (9) which is a photon counting detector (9) set up to receive light emanating from the sample location (3) for generating photon counts, coupled to the detector (9) an integrator (11) set up to receive and to integrate the photon counts over an integration time (t_{Int}) to generate integrated measurement signals, and an analogue-to-digital converter (13) set up to receive the integrated measurement signals from the integrator (11) and to generate and deliver a digital measurement signal to a control unit (15), wherein the control unit (15) is set up to determine a correction function by deconvolution of a digital measurement signal, and wherein the control unit (15) is set up to convert separate digital measurement signals in dependence on the correction function.

2. Analytical device according to claim 1, **characterized in that** the control unit (15) is set up to control the drive power applied to the light source (8), the bias voltage applied to the detector (9), and the integration time applied by the integrator (11), each in dependence on the correction function.

3. Analytical device according to one of the preceding claims, **characterized in that** it is set up to perform an initializing procedure, comprising providing a bias voltage to the detector (9) for its linear response range, applying a first drive power to the light source (8), setting a first integration time (t_{Int}) of the integrator (11), and for this setting determining a first correction function, thereafter applying a second drive power to the light source (8) and/or setting a second integration time of the integrator (11) and for each setting determining a correction function by deconvolution of the digital measurement signal, wherein the device for each sample location contains at least one solid optical reference element (20) one of which during the initializing procedure is arranged in each sample location.

4. Analytical device according to one of the preceding claims, **characterized in that** the control unit (15) is set up to convert digital measurement signals by correction factors, wherein the control unit (15) contains stored correction factors for different settings of integration times of the integrator (11), for different settings of the drive power for the light source (8), and/or for different settings of the bias voltage applied to the detector (9), wherein each correction factor is derived from a pre-determined correction function.

5. Analytical device according to one of the preceding claims, **characterized in that** it contains an optical reference element (20) which is movable into the sample location (3), and **in that** it is set up to determine a correction function for the optical reference element (20) in an arrangement of the optical reference element (20) receiving light from the light source (8) and emanating light to the detector (9).

6. Analytical device according to one of the preceding claims, **characterized in that** it contains at least two sample locations and for each sample location a fixed irradiating light path (5) coupled to a light source (8), a fixed detecting light path (6) coupled to the detector and an integrator (11), and for each sample location at least one solid optical reference element (20, R4, R5) movable into the sample location (3), wherein preferably the device is set up for measurement of at least two of light absorption, turbidity, fluorescence and light scatter.

7. Analytical device according to one of the preceding claims, **characterized in that** the light source (8) can be controlled to generate at least two different wavelengths and/or that at least two light sources (8), each generating a different wavelength, are coupled to the irradiating light path (5).

8. Analytical device according to one of the preceding claims, **characterized in that** the control unit (15) is set up to control the integration time (t_{Int}) of the integrator (11), the drive power for the light source (8), and/or the bias voltage applied to the detector (9), each in dependence on the correction function such that a pre-determined measurement signal is generated.

9. Analytical device according to one of the preceding claims, **characterized in that** the light source (8) is coupled to a fixed irradiating light path (5, 5a) directed onto the sample location (3) and the detector (9) is coupled to a fixed detecting light path (6, 6a) receiving light emanating from the sample location (3), wherein both light paths (5, 5a, 6, 6a) are directed to the sample location (3) at an angle between the light paths (5, 5a, 6, 6a) of at maximum 10°, preferably in parallel.

10. Analytical device according to one of the preceding claims, **characterized in that** the light source (8) is coupled to a fixed irradiating light path (5) formed by an optical fibre (5a) directed onto the sample location and the detector (9) is coupled to a fixed detecting light path (6) formed by an optical fibre (6a) receiving light emanating from the sample location (3).

11. Analytical device according one of claims 10 to 11, **characterized in that** the end face of the fixed irradiating light path (5) which is directed onto the sample location (3) is formed by the terminal cross-section of an optical fibre (5a), the opposite end face of this optical fibre (5a) is coupled to the light source (8), optionally with an optical filter between the light source (8) and the optical fibre (5a), and the end face of the fixed detecting light path (6) which is directed to the sample location (3) is formed by the terminal cross-section of an optical fibre (6a), the opposite end face of which optical fibre (6a) is directed onto the detector (9), optionally with an optical filter between this end face (6a) and the detector (9).

12. Analytical device according to one of the preceding claims, **characterized in that** the control unit (15) is set up to control at least one of the drive power applied to the light source (8), of the bias voltage applied to the detector (9), of the integration time applied by the integrator (11), and of the characteristic of the ADC (13), in order to generate a measurement signal which is in a pre-determined range of values, and the control unit (15) is set up to apply the correction functions to convert the measurement results to measurement results applicable for a pre-determined setting of the device.

13. Analytical process for determination of light emanating from a sample location (3) under irradiation, comprising arranging the sample in the sample location (3), irradiating the sample location (3) by a light source (8) directed to the sample location (3), receiving light emanating from the sample location (3) by a photon counting detector (9) generating photon counts, transmitting the photon counts to an integrator (11) coupled to the detector (9), the integrator (11) receiving and integrating the photon counts over an integration time (t_{Int}) and generating integrated measurement signals, transmitting the integrated measurement signals to an analogue-to-digital converter (13) and integrating the measurement signals by the integrator (11) to generate and deliver a digital measurement signal to a control unit (15), the control unit (15) determining a correction function by deconvolution of at least one digital measurement signal, and the control unit (15) converting separate digital measurement signals in dependence on the correction function.

14. Analytical process according to claim 13, wherein the sample is contained in a sample vessel (4) arranged in the sample location (3) and the light emanating from a sample under irradiation is measured for determining light scatter, and/or absorbance, and/or turbidity and/or fluorescence, or at least two of these in relation to one optical reference element (20) which is movable into the sample location (3).

15. Analytical process according to one of claims 13 to 14, wherein at least one validated external calibration standard (R5, R6) is arranged in the sample location (3) and the correction function is determined with reference to the external calibration standard (R5, R6).

16. Analytical process according to one of claims 13 to 15, comprising performing an initializing procedure which comprises providing a bias voltage to the detector (9) for its linear response range, applying a first drive power to the light source (8), setting a first integration time (t_{Int}) of the integrator (11), and for this setting determining a first correction function, thereafter applying a second drive power to the light source (8) and/or setting a second integration time (t_{Int}) of the integrator (11) and for each setting determining a correction function by deconvolution of the digital measurement signal.
